# EUROPÄISCHE PATENTSCHRIFT

(11) **EP 3 636 563 B1**
(45) Veröffentlichungstag und Bekanntmachung des Hinweises auf die Patenterteilung: **06.08.2025**
(21) Anmeldenummer: 19213546.5
(22) Anmeldetag: 20.08.2015
(51) Int. Cl.: B65G 17/20, B61B 10/02, B65G 19/02, B65G 9/00

(54) **LAUFWAGEN FÜR EINEN FÖRDERER, INSBESONDERE FÜR EINEN SCHWERKRAFTFÖRDERER, FÖRDERSYSTEM UND VERFAHREN ZUM BETRIEB EINES FÖRDERSYSTEMS**
CARRIAGE FOR A CONVEYOR, IN PARTICULAR FOR A GRAVITY CONVEYOR, CONVEYING SYSTEM, AND METHOD FOR OPERATING A CONVEYING SYSTEM
CHARIOT POUR UN CONVOYEUR, NOTAMMENT POUR UN CONVOYEUR PAR GRAVITE, SYSTEME CONVOYEUR ET PROCEDE DE FONCTIONNEMENT DE CE DERNIER

(30) Priorität: 27.08.2014 CH 12872014
(43) Veröffentlichungstag der Anmeldung: 15.04.2020
(62) Teilanmeldung aus: 15756600.1
(73) Patentinhaber: FERAG AG, 8340 Hinwil (CH)
(72) Erfinder: FENILE, Roberto, 8623 Wetzikon (CH); KÄLIN, Erich, 8640 Rapperswil (CH)
(74) Vertreter: Rentsch Partner AG

(56) Entgegenhaltungen:
- EP-A1- 0 456 978
- EP-A2- 0 291 622
- EP-B1- 0 456 978
- WO-A1-2013/135918
- CN-U- 201 777 248
- JP-A- H0 395 021
- JP-A- H04 342 657
- JP-U- H0 391 405
- JP-U- S60 132 971
- US-A- 1 920 774
- US-A- 3 012 519
- US-A- 3 338 179
- US-A- 3 715 991
- US-A- 4 248 157
- US-A- 4 531 460
- US-A1- 2012 311 840

## Beschreibung

### Technisches Gebiet

Die vorliegende Erfindung bezieht sich auf die Förderung von Waren. Sie betrifft einen Laufwagen für einen Förderer, insbesondere für einen Schwerkraftförderer, ein Fördersystem, insbesondere ein Schwerkraftfördersystem, sowie ein Verfahren zum Betrieb eines Fördersystems, insbesondere eines Schwerkraftfördersystems.

### Stand der Technik

Bei der Produktion und Nachbearbeitung von Gütern, wie auch bei der Kommissionierung und Verpackung von Aufträgen spielt die automatisierte Förderung von Waren eine wichtige Rolle. Schwerkraftförderer, insbesondere Schwerkrafthängefördersysteme zeichnen sich dabei neben anderem dadurch aus, dass sie eine Verlagerung der Förderung von Waren vom Boden in ansonsten ungenutzte räumliche Bereiche innerhalb oder ausserhalb von Gebäuden ermöglichen. Häufig werden Hängeförderanlagen deshalb überkopf an Trägern befestigt, die an der Decke, Wänden oder einzelnen am Boden befestigten Säulen angebracht sind.

Hängefördersysteme finden zudem Verwendung als Puffer zwischen zwei oder mehreren Arbeitsprozessen mit unterschiedlichen Geschwindigkeiten. Dadurch können vernetzte Prozesse zeitlich und/oder räumlich entkoppelt werden, womit beispielsweise Störungen in Prozessen behoben werden können, ohne die übrigen Teile einer Prozesskette anhalten zu müssen. Ebenso können damit Taktunterschiede in der Verarbeitung abgefedert werden.

Schwerkrafthängeförderer eignen sich in vielen Bereichen besonders zum Aufbau von Puffern. Dies einerseits aufgrund der bereits erwähnten besseren Raumausnutzung. Andererseits sind sie relativ energiesparend, da sie im Unterschied etwa zu zwangsgeförderten Hängefördersystemen keine den Laufschienen entlang führenden Antriebsmittel wie z.B. Antriebsketten benötigen und meist nur wenige kurze zwangsgeförderte Streckenteile aufweisen. Dadurch können Schwerkrafthängeförderer auch relativ einfach und kostengünstig gezielt auf veränderte Produktionsanforderungen verkleinert oder vergrössert werden.

Für den sicheren Betrieb von Schwerkrafthängeförderern ist es wichtig, dass die verwendeten Transportkörper (auch Trolleys genannt) über gleichbleibend gute Laufeigenschaften verfügen. Insbesondere muss sicher gestellt sein, dass Transportkörper auf schwerkraftgeförderten Bahnteilen nicht ungewollt abbremsen oder gar zum Stehen kommen, da dies zu Verzögerungen oder Unterbrüchen in der Förderung führen würde. Als Transportkörper für Schwerkrafthängeförderer werden deshalb meist Laufwagen mit Rädern oder Rollen verwendet, da diese im Allgemeinen einen geringeren Bewegungswiderstand aufweisen als solche mit sogenannten Gleitern, die ihrerseits einen geschwindigkeitsabhängigen Bewegungswiderstand aufweisen.

Im Stand der Technik sind unterschiedliche Arten von Laufwagen bekannt, bei denen die Räder oder Rollen auf die bei der Förderung auftretenden Belastungen ausgerichtet sind.

In WO2016030274A1 derselben Anmelderin wird neben anderem ein schienengefördertes Fördermittel enthaltend einen Förderwagen mit mindestens einer ersten, zweiten und dritten Laufrolle entlang einer Schienenführung beschrieben. Die Rotationsebenen der mindestens ersten, zweiten und dritten Laufrolle sollen dabei in einem Winkel von grösser 0° und kleiner 180° relativ zueinander angeordnet sein. Zur Vermeidung eines Kippmoments in Förderrichtung der unabhängig voneinander entlang einer Förderstrecke bewegten Förderwagen ist eine Anordnung von zwei oder mehr ersten, zweiten und/oder dritten Laufrollen vorgesehen. Ebenso wird eine Förderanlage mit solchen Fördermitteln beschrieben. Von derselben Anmelderin wird im Internet ein mit der genannten internationalen Anmeldung in Verbindung stehendes System zur Pufferung von Gütern während der Produktion gezeigt. Dieses System eignet sich für eine Vielzahl von Anwendungen. Bei einigen bestimmten Anwendungen kann es jedoch notwendig sein die Laufwagen, die Schienenart und den Schienenverlauf speziell auf das Fördergut abzustimmen, um ein optimales Ergebnis zu erhalten.

Die EP 0 856 480 A1 beschreibt ein schienengeführtes Transportmittel insbesondere zum Fördern von Druckerzeugnissen sowie eine Transportanlage mit derartigen Transportmitteln. Das Transportmittel umfasst mehrere Räder, die auf zwei Seiten einer Führungsschiene aufliegen. Bewegungen quer zur Förderrichtung sollen dabei mittels eines an den Rädern angebrachten Spurkranzes verhindert werden. Durch zueinander versetzt angeordnete Räder oder Gleitmittel soll ein Transportmittel gemäss Beschreibung weitgehend spielfrei an der Führungsschiene gelagert und geführt werden.

Die US 4,531,460 zeigt ein Materialtransportsystem, das sich auch für den hängenden Transport von Gütern mit hohem Gewicht eignet. Beschrieben werden Träger, die wenigstens zwei mechanisch verbundenen Trägerköpfe umfassen. Dabei kann ein Kopf als Antriebskopf und der zweite Kopf als Mitläuferkopf dienen. Die beiden Trägerköpfe weisen jeweils Tragräder auf, die auf horizontalen Laufflächen eine Tragschiene laufen. Zusätzlich weisen die Trägerköpfe um vertikal angeordnete Achsen rotierende kleinere Führungsrollen auf. Die Träger werden dabei aus einer relativ hohen Anzahl Komponenten aufgebaut. Zudem können sie keine Drehmomente quer zur Laufrichtung aufnehmen, sondern nur solche um Achsen parallel zur Laufrichtung und solche um vertikal rechtwinklig zur Laufrichtung stehende Achsen.

Die EP 0 291 622 B1 zeigt eine Schiene zur Führung einer Antriebskette in einem Förderbandsystem zur Handhabung einzelner Gegenstände, mit dem die Gegenstände auf wählbaren Pfaden bewegbar sind. Die Schiene soll eine Mehrzahl von vorgefertigten, lösbar miteinander verbundenen Modulen umfassen, wobei jeder Modul einen Abschnitt von quadratischem Querschnitt bildet. Gemäss der Druckschrift ist vorgesehen, dass die Module aus geraden und gekrümmten Modulen bestehen, wobei es nur einen Typ von gekrümmtem Modul gibt und der Krümmungsradius der gekrümmten Module vom kleinsten Kurvenradius der verwendeten Antriebskette bestimmt wird. An jedem Modul ist auf jeder seiner vier Seiten eine zur entsprechenden Antriebskette passende Führung angeordnet. Auf diese Weise können aufsteigende oder absteigende Pfade sowie Kurven mit dem einen Typ von gekrümmtem Modul erzeugt werden, indem dieses gedreht wird und die Antriebskette offenbar in der jeweils vertikal nach unten gerichteten Führung angeordnet wird. Die nicht von der der Antriebskette besetzten Führungen sollen wie gezeigt etwa der Aufnahme von Verbindern mehrerer Module dienen. Die EP0456978A1 betrifft einen Transporteur ist mit einer eine Lauffläche aufweisenden Laufbahn, sowie mit mehreren Laufwerken mit Rollen versehen. Weiter weist er Zugmittel auf, die ein an den Laufwerken befestigtes Zugorgan umfassen. Zur Vereinfachung der Montage und für einen geräuscharmen Lauf wird vorgeschlagen, dass die Lauffläche der Laufbahn für die Rollen der Laufwerke aus Kunststoff besteht.

US4248157A offenbart einen Laufwagen nach dem Oberbegriff des Anspruchs 1.

Es hat sich herausgestellt, dass bei den bisherigen Systemen, bei denen die Laufwagen sich streckenweise durch Schwerkraft angetrieben von selbst vorwärts bewegen müssen, Behinderungen im Lauf der Wagen vor allem dort auftreten, wo der Laufweg räumliche Kurven einschliesst. Derartige Behinderungen, die auch von der Art der transportierten Güter abhängen, können den Betrieb eines solchen Fördersystems deutlich beeinträchtigen

### Darstellung der Erfindung

Es ist daher eine Aufgabe der Erfindung, einen laufsicheren Laufwagen insbesondere für eine Schwerkraftförderanlage zur Verfügung zu stellen. Ein solcher Laufwagen soll für Güter unterschiedlicher Abmessungen und/oder Massen sowie für Förderstrecken mit nahezu beliebigem Bahnverlauf geeignet sein.

Es ist eine weitere Aufgabe der Erfindung, einen zu einem relativ niedrigen Stückpreis herstellbaren Laufwagen zur Verfügung zu stellen.

Eine andere Aufgabe der Erfindung besteht darin, ein funktionssicheres und einfaches Fördersystem, insbesondere Schwerkraftfördersystem, zur Verfügung zu stellen.

Eine weitere Aufgabe der Erfindung ist es, ein vorteilhaftes Verfahren zum Betrieb eines solchen Fördersystems zur Verfügung zu stellen.

Diese und andere Aufgaben werden durch die Ansprüche 1, 13 und 15 gelöst.

Ausgestaltungen der Erfindung ergeben sich aus den abhängigen Ansprüchen.

Der erfindungsgemässe Laufwagen gemäß Anspruch 1 für ein schienengeführtes Fördersystem, insbesondere einen Schwerkraftförderer, umfasst:
a) einen zum Umgreifen einer Laufschiene ausgebildeten Laufwagenkörper, der einen ersten und einen zweiten Schenkel umfasst, die durch einen sich quer erstreckenden Verbindungsabschnitt miteinander verbunden sind, wobei
b) der erste Schenkel auf seiner Innenseite angebrachte erste Rollen aufweist und
c) der zweite Schenkel auf seiner Innenseite angebrachte zweite Rollen aufweist und
d) der Verbindungsabschnitt auf seiner Innenseite angebrachte dritte Rollen aufweist,
e) die ersten und zweiten Rollen stehend angeordnet sind und
f) die dritten Rollen liegend angeordnet sind.

In an einer Laufschiene montierten Zustand kann ein Laufwagen auch wenigstens zeitweilig gedreht sein, so dass bei z.B. bei einer solchen Drehung um 90° zeitweilig die ersten und zweiten Rollen liegend und die dritten Rollen stehend angeordnet sein können.

Eine Ausgestaltung des Laufwagens zeichnet sich dadurch aus, dass der Laufwagen im Querschnittsprofil U-förmig ausgebildet ist.

Ein erfindungsgemässer Laufwagen kann für einen Schwerkrafthängeförderer verwendet werden. Aufgrund seiner besonderen Eigenschaften wird ein erfindungsgemässer Laufwagen nur hängend an einer Laufschiene angebracht werden. Bei einer entsprechenden Ausrichtung einer Laufschiene kann eine Ausgestaltung des Laufwagens alternativ zu der Erfindung auch stehend auf oder seitlich an einer Laufschiene laufen. Auch sind Ausrichtungen dazwischen möglich.

Eine Ausgestaltung des Laufwagens nach der Erfindung zeichnet sich dadurch aus, dass Mittel zum hängenden oder tragenden/stützenden Fördern von Gegenständen am Verbindungsabschnitt angebracht sind. Ein Laufwagen kann sich somit wenigstens zeitweilig oberhalb, seitlich oder unterhalb eines von ihm geförderten Gegenstandes befinden.

In einer Ausgestaltung des Laufwagens umfasst dieser als Mittel zu einem tragenden/stützenden Fördern von Gegenständen eine Platte, die am Verbindungsabschnitt angebracht ist. Eine solche Platte kann eine einzelne Platte sein. Eine solche Platte kann aber auch eine Anordnung mehrerer Platten sein, die auf einem und/oder auf mehreren Laufwagen angebracht sind, wie später noch genauer erläutert wird.

Nach der Erfindung sind die ersten und die zweiten Rollen spiegelsymmetrisch zu einer vertikalen Symmetrieebene des Laufwagens angeordnet.

Nach der Erfindung liegen die Drehachsen der dritten Rollen in der vertikalen Symmetrieebene des Laufwagens.

Der Laufwagen nach der Erfindung ist dadurch gekennzeichnet, dass die ersten und zweiten Rollen sowie die dritten Rollen jeweils paarweise vorgesehen sind, wobei die Rollen eines Paars jeweils in Laufrichtung des Laufwagens hintereinander angeordnet sind.

Insbesondere können die Drehachsen von jeweils zugeordneten Rollenpaaren den gleichen Abstand zueinander haben.

Optional können die Rotationsachsen der Rollen eines ersten Rollensatzes, umfassend eine erste und eine zweite und eine dritte Rolle, in einer ersten Ebene liegen und die Rotationsachsen der Rollen eines zweiten Rollensatzes, ebenfalls umfassend eine erste und eine zweite und eine dritte Rolle, in einer zweiten Ebene liegen, wobei die erste Ebene parallel zu der zweiten Ebene liegt.

Es hat sich gezeigt, dass bei bestimmten Anwendungen mittels einer solchen Anordnung von zwei Rollensätzen eine besonders exakte und sichere Führung erreicht werden kann. Insbesondere kann damit selbst bei starken Krümmungen in der Trajektorie einer Förderstrecke sichergestellt werden, dass es zu keinen Verkantungen zwischen Rollen und der Laufschiene kommen kann. Auch kann so sichergestellt werden, dass der Laufwagen nicht ungewollt zu schlingern und/oder zu vibrieren beginnt. Somit kann eine gleichmässige Belastung der Rollen und eine ruhige Fahrt des Laufwagens erreicht werden.

Eine weitere Ausgestaltung des Laufwagens ist dadurch gekennzeichnet, dass die ersten und zweiten Rollen einen Durchmesser von 10-50 mm und eine Breite von 5-25 mm aufweisen.

Eine andere Ausgestaltung eines Laufwagens zeichnet sich dadurch aus, dass dieser einen ersten Rollensatz mit einer ersten, einer zweiten und einer dritten Rolle umfasst, die alle denselben Durchmesser und dieselbe Breite aufweisen. Die Rotationsachsen der Rollen des ersten Rollensatzes liegen dabei in einer ersten Ebene. Ebenfalls zeichnet sich eine solche Ausgestaltung eines Laufwagens dadurch aus, dass dieser einen zweiten Rollensatz mit einer ersten, einer zweiten und einer dritten Rolle umfasst, die alle denselben Durchmesser und dieselbe Breite aufweisen. Dabei liegen die Rotationsachsen der Rollen dieses zweiten Rollensatzes in einer zweiten Ebene. Die erste Ebene liegt bei einer solchen Ausgestaltung eines Laufwagens parallel und beabstandet zu der zweiten Ebene. Es hat sich gezeigt, dass mit einer solchen Ausgestaltung eines Laufwagens eine besonders sichere Förderung selbst auf Förderstrecken mit sehr stark gekrümmten Trajektorien erzielt werden kann.

Eine andere Ausgestaltung des Laufwagens ist dadurch gekennzeichnet, dass die dritten Rollen und die ersten und die zweiten Rollen dieselben Abmessungen haben. Dies kann vorteilhaft sein, um die Anzahl unterschiedlicher Komponenten eines Laufwagens zu reduzieren, wodurch einerseits deren Herstellung vereinfacht und - auch aufgrund der damit möglichen vereinfachten Lagerhaltung - kostengünstiger werden kann.

Eine noch andere Ausgestaltung des Laufwagens ist dadurch gekennzeichnet, dass die zweiten Rollen und/oder ersten und zweiten Rollen als mit einem Rollenkörper umspritzte Kugellager ausgebildet sind.

Eine weitere Ausgestaltung des Laufwagens ist dadurch gekennzeichnet, dass die ersten und zweiten Rollen und die dritten Rollen am Laufwagenkörper lösbar befestigt, insbesondere mit dem Laufwagenkörper bzw. am Laufwagenkörper verschraubt sind. Dadurch ist beispielsweise ein vereinfachter Austausch von defekten Rollen möglich. Jedoch sind auch andere Arten von Verbindungen denkbar.

Eine andere Ausgestaltung des Laufwagens ist dadurch gekennzeichnet, dass der Laufwagenkörper einstückig ausgebildet ist.

Eine wieder andere Ausgestaltung des Laufwagens ist dadurch gekennzeichnet, dass der Laufwagen wenigstens ein am ersten oder zweiten Schenkel oder dem Verbindungsabschnitt nach aussen abstehend angeordnetes Koppelelement für die zumindest zeitweise Koppelung mit einer Vorrichtung zur Beschleunigung oder zur gleichförmigen Bewegung oder zur Bremsung des Laufwagens aufweist.

Insbesondere sind die ersten und zweiten Rollen jeweils paarweise vorgesehen, wobei die Rollen eines Paars jeweils in Laufrichtung des Laufwagens hintereinander angeordnet sind, und das wenigstens eine Koppelelement zwischen den Drehachsen der ersten oder zweiten Rollen angeordnet ist. Eine solche Anordnung kann vorteilhaft sein, um beim Zusammenstossen zweier Laufwagen auftretende Nickmomente zu minimieren. Weiterhin kann der Laufwagen zwei Koppelelemente aufweisen, die spiegelsymmetrisch zur vertikalen Symmetrieebene angeordnet sind.

Eine weitere Ausgestaltung des Laufwagens ist dadurch gekennzeichnet, dass der Laufwagen wenigstens einen vom Laufwagenkörper in eine Laufrichtung des Laufwagens nach aussen abstehenden, elastisch verformbaren Pufferkörper zum Abpuffern eines Kontaktes mit einem zweiten Laufwagen aufweist. Insbesondere kann der Laufwagen wenigstens einen am Verbindungsabschnitt mittig angebrachten mittigen Pufferkörper aufweisen. Dadurch können beispielsweise Beschädigungen bei einem Zusammenstossen der Verbindungsabschnitte aufeinanderfolgender Laufwagen vermieden werden. Dies kann z.B. bei Laufschienen mit einer kontinuierlich abnehmenden Steigung vorteilhaft sein.

Eine andere Ausgestaltung des Laufwagens ist dadurch gekennzeichnet, dass der Laufwagen Kupplungsmittel aufweist, mit welchen er mit wenigstens einem anderen Laufwagen verbunden werden kann. Dadurch kann eine verkettete Laufwagenanordnung gebildet werden. Solche verketteten Laufwagenanordnungen können je nach Anwendungsgebiet wenige Laufwagen (beispielsweise 2, 3 oder mehr) oder auch eine Vielzahl solcher (beispielsweise 10, 20 oder mehr) umfassen. Ebenfalls können solche verketteten Laufwagenanordnungen auch endlose (geschlossene) oder quasi-endlose (sehr lange) Ketten sein, wie später noch genauer erläutert wird.

Je nach Anwendungsgebiet der Laufwagens können diese mit den Kupplungsmitteln lösbar oder nicht-lösbar verbunden sein.

Kupplungsmittel können mechanische Kupplungsmittel, z.B. Haken und Ösen, Kardangelenke oder Kugelgelenke sein, können aber z.B. auch magnetische Kupplungsmittel oder Verklebungen sein.

Eine durch solche Kupplungsmittel erfolgte Verbindung zwischen Laufwagen kann winkelstarr oder auch gelenkig sein, um etwa bei Kurvenfahrten die notwendige Beweglichkeit der einzelnen Laufwagen zu gewährleisten. Die Verbindung kann auch zusätzliche Elemente wie Verbindungsstangen, Federn oder Feder-Dämpfer-Elemente umfassen, um z.B. die kinematische Kopplung verbundener Laufwagen gezielt auf eine bestimmte Anwendung einzustellen.

Insbesondere kann der Laufwagen wenigstens einen vom Laufwagenkörper in eine Laufrichtung des Laufwagens nach aussen abstehenden, elastisch verformbaren Pufferkörper zum Abpuffern eines Kontaktes mit einem zweiten Laufwagen aufweisen, wobei die Kupplungsmittel in den Pufferkörper integriert sein können. Für einige Anwendungen können die Pufferkörper eines ersten und eines daran anschliessenden zweiten Laufwagens einstückig ausgebildet sein, wobei das Kupplungsmittel beispielsweise eine als Scharnier, respektive Gelenk ausgebildete Dünnstelle sein kann.

Das erfindungsgemässe Fördersystem, insbesondere Schwerkraftfördersystem umfasst wenigstens eine Laufschiene und wenigstens einen Laufwagen gemäss einem der Patentansprüche 1 bis 12, wobei die Laufschiene und der Laufwagen aufeinander abgestimmt sind und die Laufschiene vom Laufwagen umgriffen wird. Eine Ausgestaltung des Fördersystems, insbesondere eines Schwerkraftfördersystems, ist dadurch gekennzeichnet, dass mehrere Laufwagen vorgesehen sind, dass ein Teil der Laufwagen als Transportwagen ausgebildet und mit Transportgut bestückbar ist, und ein anderer Teil der Laufwagen als Abstandswagen ausgebildet und zur Sicherstellung eines Abstandes zwischen den Transportwagen einsetzbar ist.

Das erfindungsgemässe Verfahren zum Betreiben eines Fordersystems nach Anspruch 15, insbesondere eines Schwerkraftfördersystems, nach der Erfindung zeichnet sich dadurch aus, dass eine Mehrzahl von Laufwagen vorgesehen ist, und ein Teil der Laufwagen mit Transportgut bestückt ist und anderer Teil der Laufwagen leer ist und zur Ausbildung eines Abstandes zwischen den mit Transportgut bestückten Laufwagen eingesetzt ist.

Eine Ausgestaltung des Verfahrens ist dadurch gekennzeichnet, dass die mit Transportgut bestückten Laufwagen und die zur Bildung eines Abstandes zwischen ihnen eingesetzten leeren Laufwagen aneinander gekoppelt sind. Je nach Anwendungsgebiet kann diese Koppelung lösbar oder nicht-lösbar sein.

Eine Ausgestaltung des Verfahren zeichnet sich dadurch aus, dass mehrere Laufwagen zu wenigstens einer gekoppelten Laufwagenanordnung verkettet sind. Eine solche Laufwagenanordnung bzw. verkettete Einheit kann beispielsweise zwischen 2 und 20 Laufwagen umfassen. Es sind jedoch auch verkettete Einheiten mit mehr Laufwagen denkbar.

Eine weitere Ausgestaltung des Verfahrens zeichnet sich dadurch aus, dass die Last wenigstens eines geförderten Transportguts auf mehrere Laufwagen der wenigstens einen gekoppelten Laufwagenanordnung verteilt wird. Dies kann beispielsweise dadurch erreicht werden, indem ein Transportgut gleichzeitig mit mehreren Laufwagen mechanisch verbunden wird, z.B. an diese angehängt wird. Auf diese Weise kann beispielsweise auch besonders schweres Transportgut gefördert werden, da die auftretenden Belastungen auf die mehreren Laufwagen verteilt werden können.

Ein erfindungsgemässer Laufwagen insbesondere für einen Schwerkraftförderer eignet sich in besonderem Masse für eine Laufschiene wie sie in einer eingereichten parallelen Schweizer Patentanmeldung derselben Anmelderin im Detail beschrieben wird. Jedoch ist ein erfindungsgemässer Laufwagen nicht prinzipiell auf die Verwendung mit solchen Laufschienen beschränkt.

In der Vergangenheit hat sich gezeigt, dass sich die Rollen von Laufwagen für Schwerkraftförderer bei bestimmten Lastfällen so relativ zur Laufschiene ausrichten, dass sich dessen Bewegungswiderstand stark erhöht. Einerseits kann es vorkommen, dass Rollen die eigentlichen Laufflächen einer Laufschiene verlassen und stattdessen Flächen mit erheblich höherem Rollwiderstand berühren.

Andererseits ist es auch möglich, dass die Kontaktkräfte zwischen den Rollen und Laufflächen stark erhöht werden, was ebenfalls eine erhebliche Zunahme des Rollwiderstands zur Folge haben kann.

Ebenso kann ein Laufwagen aufgrund bestimmter äusserer Kräfte unter umständen so relativ zu einer Laufschiene ausgerichtet werden, dass es zu einem Verklemmen der Laufschiene mit dem Wagenkörper und/oder den Rollen kommen kann, wodurch der Laufwagen abgebremst wird. Die Förderung wird damit unter Umständen wenigstens zeitweilig unterbrochen und/oder der Laufwagen oder die Laufschiene kann beschädigt werden.

Insbesondere bei Schwerkrafthängeförderern wirken einerseits (translatorische) Kräfte in Laufrichtung (x), Kräfte horizontal seitlich zur Laufrichtung (y) und Kräfte in vertikaler Richtung (z) auf einen Laufwagen. Daneben wirken auf einen Laufwagen jedoch auch unterschiedliche Drehmomente, die insbesondere von Beschleunigungen des geförderten Guts, aber auch des Laufwagens selber, während dem Transport entlang der Förderbahn hervorgerufen werden. Solche Beschleunigungen treten hauptsächlich bei horizontalen und vertikalen Richtungsänderungen und bei Abbremsvorgängen oder Geschwindigkeitszunahmen auf. Als problematisch haben sich dabei für viele Schienenarten vor allem Nickmomente erwiesen, also Drehmomente um seitlich zur Laufrichtung ausgerichtete Achsen (y). Jedoch können - abhängig vom zu fördernden Gut und dem Verlauf der Schienenbahn - ebenso Giermomente problematisch werden, also Drehmomente um vertikal auf die Laufrichtung stehende Achsen (z). Ebensolches gilt für Rollmomente, also Drehmomente um parallel zur Laufrichtung ausgerichtete Achsen (x).

Ein erfindungsgemässer Laufwagen kann aufgrund in spezieller Weise angeordneter, auf eine Laufschiene abgestimmter Rollen sowohl den auftretenden Kräften und Drehmomenten einzeln, als auch in beliebigen Kombinationen dieser begegnen. Somit wird ein Verklemmen von Laufwagens und Laufschiene sicher vermieden.

Dazu umfasst ein erfindungsgemässer Laufwagen für einen Schwerkraftförderer einen zum Umgreifen einer Laufschiene ausgebildeten, Laufwagenkörper. Ein solcher Laufwagenkörper weist einen ersten und einen zweiten Schenkel auf, die durch einen Verbindungsabschnitt verbunden sind. An der Innenseite des ersten Schenkels und auf der Innenseite des zweiten Schenkels sind erfindungsgemäss erste bzw. zweite Rollen angebracht. Auf der Innenseite des Verbindungsabschnitts sind dritte Rollen angebracht. Erfindungsgemäss ist vorgesehen, dass die ersten und zweiten Rollen dabei stehend angeordnet sind, wogegen die dritten Rollen liegend angeordnet sind. Wird ein solcher Laufwagen etwa bei einem Schwerkraftförderer, beispielsweise einem Schwerkrafthängeförderer, verwendet, so tragen die ersten und zweiten Rollen vorwiegend die in vertikaler Richtung wirkende Belastung, dienen also als Tragrollen, wogegen die dritten Rollen vorwiegend der Führung des Laufwagens in horizontaler Richtung dienen, wirken also als Führungsrollen. Die Rollen können diese Funktionen jedoch zeitweilig auch ändern und/oder gegenseitig tauschen, wie später noch genauer erläutert wird. Dies kann beispielsweise der Fall sein, wenn in Kurvenabschnitten Beschleunigungen quer zur Laufrichtung auftreten oder wenn die Laufschiene um ihre Längsachse gedreht ist.

Erfindungsgemässe Laufwagen zeigen dabei besonders gute Eigenschaften, wenn sie in Kombination mit Laufschienen verwendet werden, die über im Wesentlichen liegende, parallel und gegeneinander gerichtet Oberflächen verfügen, die als Laufflächen für die Tragrollen dienen können und zudem über im Wesentlichen stehende, parallel und gegeneinander gerichtete Oberflächen verfügen, die als Laufflächen der Führungsrollen dienen können.

Am Verbindungsabschnitt eines Laufwagens können Mittel zum Fördern von Transportgut (Tuben, Flaschen, Schachteln, Boxen etc.) angebracht sein. Dieses Fördern kann beispielsweise hängend oder tragend (respektive stützend) erfolgen. Es ist aber im Rahmen der Erfindung auch möglich, dass Laufwagen aus bestimmten Gründen keine solchen Mittel aufweisen, wie später noch genauer erläutert wird.

Die Führungsrollen dienen einerseits dazu, den Laufwagen so zu führen, dass seine Laufrichtung im Wesentlichen mit jener der Laufschiene übereinstimmt. Dies geschieht indem die dritten Rollen als Führungsrollen beispielsweise in Kurvenabschnitten die seitlich von der Laufschiene auf die Laufkörper wirkenden Zentripetalkräfte aufnehmen, wodurch der Laufwagen umgelenkt wird. Die dritten Rollen beschränken dabei zugleich Gierbewegungen, etwa die maximal mögliche Rotation des Laufwagens gegenüber der Laufschiene um eine vertikale Achse (z). Folglich kann die Laufrichtung des Wagens nicht über ein vorbestimmtes Mass von jener der Laufschiene abweichen. Damit wird zugleich verhindert, dass die wenigstens teilweise als Tragrollen wirkenden ersten und zweiten Rollen mit Teilen der Laufschiene in Kontakt kommen, die keine Laufflächen sind. Andererseits wird so auch die Reibung zwischen den Rollen und den Laufflächen reduziert. Die ersten und zweiten Rollen dienen hierbei auch der Aufnahme von Giermomenten, die auf den Laufwagen wirken.

Die ersten und zweiten Rollen des Laufwagens dienen einerseits dazu, das Gewicht eines geförderten Förderguts und auch jenes des Laufkörpers auf die Laufschiene zu übertragen.

Zusätzlich beschränken die ersten und zweiten Rollen auch Nickbewegungen eines Laufwagens relativ zur Laufschiene, wie sie etwa bei abfallenden Bahnabschnitten auftreten. Dies geschieht dadurch, dass ein Nicken nur soweit möglich ist, bis eine vordere erste oder zweite Rolle mit einer oberen Lauffläche der Laufschiene in Kontakt kommt und eine hintere erste oder zweite Rolle mit einer unteren Lauffläche in Kontakt ist. Nickmomente können so auf die Laufschiene übertragen werden, ohne dass der Rollwiderstand kritisch zunimmt. Ebenso wird durch eine solche erfindungsgemässe Beschränkung von Nickbewegungen verhindert, dass die ersten und zweiten Rollen mit Bereichen der Laufschiene in Kontakt kommen, die keine Laufflächen sind.

Weiter beschränken die ersten und zweiten Rollen auch Rollbewegungen des Laufwagens relativ zur Laufschiene, wie sie etwa in Kurvenabschnitten auftreten können. Bei reinen Rollmomenten wird eine Rollbewegung erzeugt, die dazu führt, dass die ersten Rollen mit den oberen Laufflächen und die zweiten Rollen mit den unteren Laufflächen in Kontakt kommen, oder umgekehrt. Eine solche Kontaktierung definiert eine maximale Rollbewegung. Dadurch wird verhindert, dass die dritten Rollen mit Teilen der Laufschiene in Kontakt kommen, die keine Laufflächen sind. Gleichzeitig führen die dritten Rollen den Laufwagen noch immer und verhindern, dass, dass die ersten und zweiten Rollen mit Bereichen der Laufschiene in Kontakt kommen, welche nicht Laufflächen sind.

Der Laufwagenkörper kann beispielsweise einstückig ausgebildet sein, womit gegebenenfalls eine kostengünstige Herstellung möglich wird. Grundsätzlich können erfindungsgemässe Laufwagenkörper durch verschiedene Verfahren und aus unterschiedlichen Materialien hergestellt werden. So ist etwa eine einstückige Formgebung mittels Spritzgiessverfahren für Kunststoffe (z.B. Polyethylen, Polyurethane oder Polyamide) oder Metalle (z.B. Aluminiumlegierungen oder Stahl) möglich. Ebenso können Laufwagenkörper aus lang- oder kurzfaserverstärkten Kunststoffen hergestellt werden, wobei bspw. Glasfasern oder Kohlefasern verwendet werden können.

Ebenso ist die Verwendung von metallischen oder nicht-metallischen Inserts in einem Laufwagenkörper möglich. Solche können etwa zur Bereitstellung von Gewinden, zur Anbringung von Tragmitteln oder der Befestigung der Trag- und Führungsrollen dienen. Alternativ oder in Ergänzung können Inserts auch als lokale Verstärkungen in Regionen mit konzentrierter Krafteinleitung und/oder zur Versteifung der Gesamtstruktur verwendet werden.

Ein Laufwagenkörper kann auch mittels Biegen von Blechen hergestellt werden.

Insbesondere bei mittels Biegen von Blechen hergestellten Laufwagenkörpern können auch andere Komponenten in den Laufwagenkörper integriert werden. So können etwa Koppelelemente beispielsweise durch ein Rausbiegen von Blechzungen oder ähnlichem am Laufwagenkörper angeformt werden. Durch eine solche Art von Funktionsintegration können die Herstellungskosten gegebenenfalls deutlich reduziert werden.

Entsprechende gebogene Blechteile können bei Bedarf auch mit Kunststoffen umspritzt oder sonst wie beschichtet werden. Solche Ausführungsformen erlauben gegebenenfalls eine kostengünstige Herstellung von Laufwagenkörpern mit bestimmten optischen oder chemischen Oberflächen, wie sie etwa für eine Verwendung in der Lebensmittelindustrie notwendig sind.

Ein Laufwagenkörper kann auch mittels spanender Formgebung, bspw. aus einem Vorformling hergestellt werden. So kann ein Laufwagenkörper auch aus einem Abschnitt eines Strangprofils hergestellt werden, etwa einem entsprechenden U-, V-, oder Y-Profil. Dabei können auch mehrere solche Abschnitte zu einem Laufwagenkörper zusammengefügt werden können.

Die Geometrie der Laufwagenkörper kann zusätzliche Elemente umfassen, welche seine Festigkeit und/oder Steifigkeit erhöhen. So können die Schenkel und/oder der Verbindungsabschnitt beispielsweise schalenförmig ausgebildet sein. Alternativ oder in Ergänzung können Verstärkungsrippen enthalten sein, insbesondere im Bereich des Verbindungsabschnitts und der Übergänge von diesem in die beiden Schenkel. Ebenso kann ein Laufwagenkörper Bereiche mit erhöhter Wanddicke aufweisen.

Der Laufwagen weist mit Vorteil mehrere Koppelelemente auf, die insbesondere spiegelsymmetrisch zur vertikalen Symmetrieebene angeordnet sind. Andere Anordnungen sind ebenfalls möglich.

Der Laufwagen kann zudem einen optionalen Marker aufweisen, über welchen sich der Laufwagen und/oder das am Laufwagen angebrachten Transportgut eindeutig identifizieren lässt. Als Marker kann beispielsweise ein RFID-Tag oder eine optische Markierung wie eine Beschriftung oder ein Barcode verwendet werden. Ebenso ist die Verwendung mehrerer Marker möglich. Solche Marker können auch in oder an einem Koppelelement angeordnet sein.

Der Laufwagenkörper kann mit Vorteil auch wenigstens einen in eine Laufrichtung des Laufwagens nach aussen abstehenden, elastisch verformbaren Pufferkörper aufweisen. Solche Pufferkörper dienen dazu, Stösse beim Zusammentreffen mehrerer auf einer Laufschiene angebrachter Laufwagen zu dämpfen. Der Pufferkörper kann dazu z.B. wenigstens teilweise aus einem elastischen oder bevorzugt elastisch-plastischen Material hergestellt sein. Der Pufferkörper kann ein integraler Bestandteil des Laufwagenkörpers sein, oder auch ein fest oder lösbar mit diesem verbundenes eigenes Bauteil sein. Dazu kann er einen oder mehrere Zapfen aufweisen, mit dem (denen) er in eine entsprechende Bohrung am Laufwagenkörper eingreift.

Bei einem mittels Biegen von Blech hergestellten Laufwagenkörper kann ein Pufferkörper auch angespritzt sein, wodurch bei Bedarf eine besonders einfache und mechanisch belastbare Verbindung zwischen Laufwagenkörper und Pufferkörper erzeugt werden kann.

Alternativ oder in Ergänzung dazu können am Laufwagenkörper auch Vorsprünge (z.B. Blechzungen) angebracht sein, die in entsprechende Öffnungen von Pufferkörpern eingeführt werden können, um die Pufferkörper mit dem Laufwagenkörper mechanisch zu verbinden. Dazu können diese Vorsprünge bei Bedarf auch Widerhaken aufweisen, die nach erfolgter Einführung einer Auftrennung entgegenwirken.

Das erfindungsgemässe Fördersystem, insbesondere Schwerkraftfördersystem, ist insbesondere zur Förderung von Transportgut mit einer Masse zwischen etwa 50 Gramm und 30 Kilogramm geeignet. Jedoch kann ein erfindungsgemässes Fördersystem bei entsprechender Skalierung prinzipiell auch für Transportgut mit einer Masse ausserhalb dieses Bereichs verwendet werden. Beim Betrieb eines solchen Systems kann ein Teil der Laufwagen mit Transportgut bestückt sein, währenddem ein anderer Teil der Laufwagen leer bleibt und einen Abstand zwischen den mit Transportgut bestückten Laufwagen bestimmt und aufrecht erhält. Auf diese Weise kann auch Transportgut mit grösseren Abmessungen befördert werden, ohne dass das Transportgut unterschiedlicher Transportwagen miteinander in Berührung kommt. Auch kann dadurch, falls notwendig, die maximal pro Längeneinheit auf eine Laufschiene wirkende Belastung auf einfache und sichere Weise begrenzt werden.

Ein oder mehrere vorlaufende leere Laufwagen und/oder ein oder mehrere nachlaufende leere Laufwagen können dabei auch an einen mit einem Transportgut bestückten Laufwagen gekuppelt werden, um eine feste Wagenkomposition zu bilden.

Ebenfalls kann auch eine Mehrzahl von Laufwagen so zusammengeschlossen bzw. verkettet, werden dass diese eine Kette von Laufwagen bilden. Damit kann auch eine Förderung durch einen an der Laufschiene angebrachten Antrieb erfolgen.

Die gebildete Kette kann eine Endloskette (geschlossene Kette) sein. Die gebildete Kette kann jedoch auch eine endliche Kette mit einem ersten und einem letzten Laufwagen sein.

### Kurze Erläuterungen zu den Figuren

Die Erfindung soll nachfolgend anhand von Ausführungsbeispielen im Zusammenhang mit den beiliegenden Zeichnungen näher erläutert werden. Es zeigen schematisch:
- Fig. 1: eine Ausführungsform eines Laufwagens für einen Förderer, insbesondere einen Schwerkraftförderer, in einer perspektivischen Ansicht von oben;
- Fig. 2: die Ausführungsform aus Fig. 1 in einer Ansicht von vorne;
- Fig. 3: die Ausführungsform aus Fig. 1 in einer Ansicht von oben;
- Fig. 4: die Ausführungsform aus Fig. 1 in einer Ansicht von der Seite;
- Fig. 5: eine Ausführungsform einer Laufschiene für den Laufwagen aus Fig. 1 in Profilansicht;
- Fig. 6: den Laufwagen aus Fig. 1 in der Laufschiene aus Fig. 5;
- Fig. 7: in einer Ansicht von der Seite eine Zusammenstellung dreier Laufwagen gemäss Fig. 1, wobei der mittlere Laufwagen ein zu förderndes Transportgut trägt, während die beiden anderen Laufwagen unbeladen sind und zur Abstandshaltung dienen;
- Fig. 8: in einer zu Fig. 7 vergleichbaren Darstellung eine Zusammenstellung von zwei beladenen Laufwagen, die durch zwei unbeladene Laufwagen auf Abstand gehalten werden und zusätzlich mit je einem unbeladenen vor- und nachlaufenden Laufwagen kombiniert sind;
- Fig. 9: eine Ausführungsform eines Laufwagens als Tragewagen mit einer Tragplatte in einer perspektivischen Ansicht von unten;
- Fig. 10: die Ausführungsform von Fig. 9 in einer Ansicht von vorne.

### Wege zur Ausführung der Erfindung

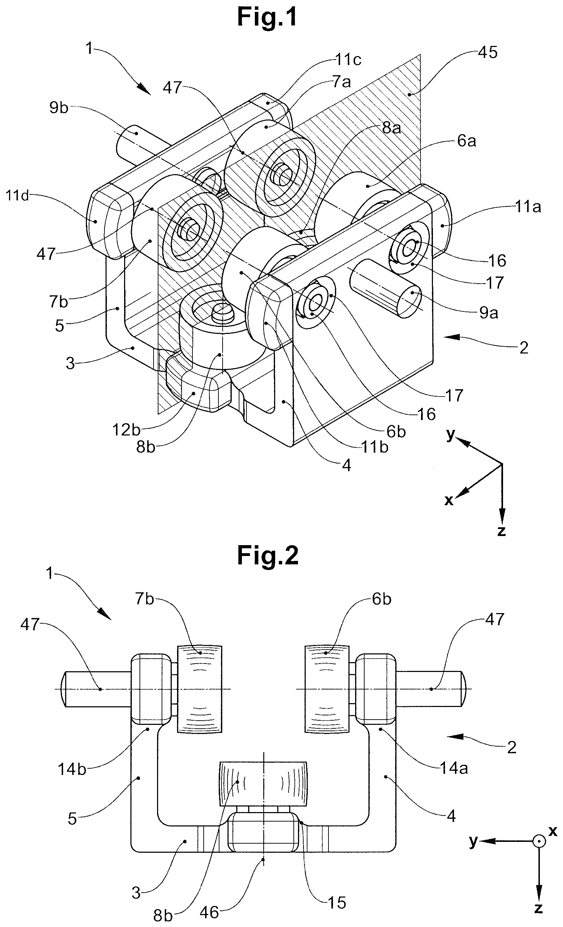

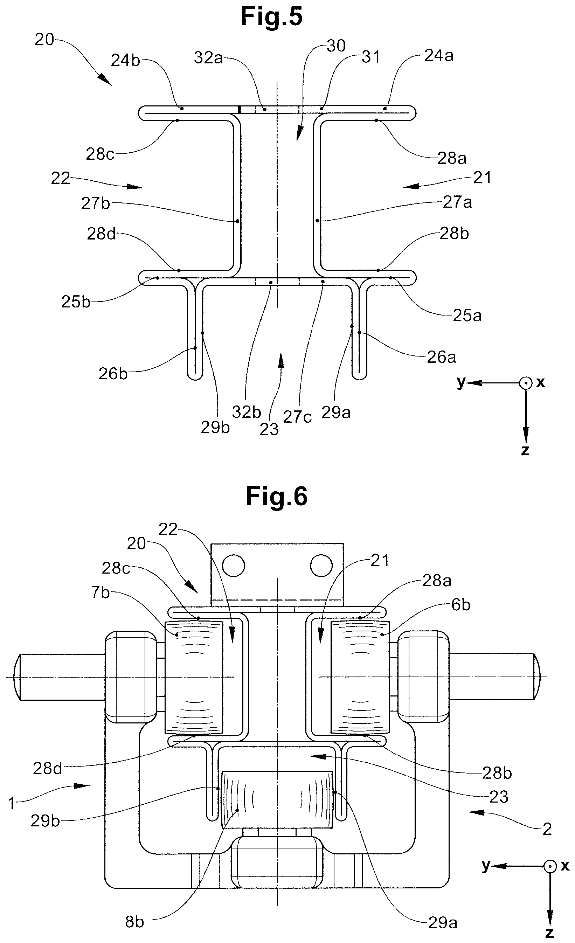

Die **Figuren 1 bis 4** zeigen in verschiedenen Ansichten eine Ausführungsform eines Laufwagens 1 für einen Förderer, insbesondere einen Schwerkraftförderer. Der gezeigte Laufwagen 1 umfasst einen im Querschnitt U-förmigen Laufwagenkörper 2, der einen in dieser Ausführungsform unten angeordneten (horizontalen) Verbindungsabschnitt 3 und seitlich daran anschliessend einen ersten und zweiten (vertikalen) Schenkel 4 bzw. 5 aufweist. Dadurch ist der gezeigte Laufwagen in der Lage, eine Laufschiene gemäss Fig. 5 zu umgreifen und als Aussenläufer auf ihr zu fahren. Auf der Innenseite des ersten Schenkels 4 sind in der gezeigten Ausführungsform zwei erste Rollen 6a,b angeordnet, die als Tragrollen wirken. Auf der Innenseite des zweiten Schenkels 5 sind zwei zweite Rollen 7a,b angeordnet, die ebenfalls als Tragrollen dienen. Alle ersten und zweiten Rollen sind jeweils um eine Drehachse 47 (Fig. 2) drehbar gelagert.

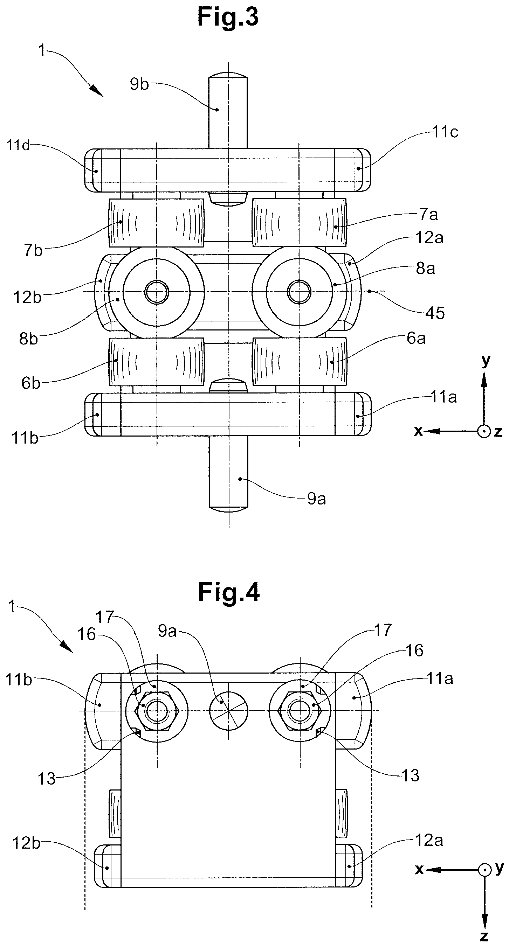

Wie in den **Figuren 2** **und** **3** gezeigt, sind die Drehachsen 47 der ersten und zweiten Rollen-Paare 6a,b, 7a,b im Wesentlichen parallel zueinander ausgerichtet (parallel zur y-Achse). Darüber hinaus sind die ersten 6a,b und zweiten Rollen 7a,b im Bezug auf eine vertikale Symmetrieebene 45 (parallel zur xz-Ebene; Fig. 3) spiegelsymmetrisch zueinander angeordnet.

Auf der Innenseite des Verbindungsabschnitts 3 sind mittig zwei dritte Rollen 8ab angeordnet und drehbar gelagert. Diese dritten Rollen wirken als Führungsrollen. Die Drehachsen der dritten Rollen 8a,b liegen dabei in der Symmetrieebene 45 (vgl. **Figur** 3). In der gezeigten Ausführungsform eines erfindungsgemässen Laufwagens 1 haben die Drehachsen 46 der beiden dritten Rollen 8a,b denselben Abstand zueinander wie die Drehachsen 47 der ersten und zweiten Rollen 6a,b, 7a,b. Die Führungsrollen und ersten sowie zweiten Rollen sind zudem alle baugleich. Wie in den **Figuren 2** **und** **3** gezeigt ist, weisen die verwendeten Rollen zudem leicht bombierte Laufflächen auf. Eine solche Bombierung kann den Rollwiderstand der Rollen verringern, insbesondere auch wenn der Laufwagen um eine Achse parallel zur Laufrichtung (x) rotiert ist.

Die ersten und zweiten Rollen 6a,b, 7a,b sind jeweils als mit einem Kunststoff umspritzte Kugellager ausgestaltet. Die Achsen der Rollen sind in montiertem Zustand in Bohrungen gelagert, die im Laufwagenkörper eingebracht sind. Die Achsen sind in der gezeigten Ausführungsform mit Muttern 16 verschraubt. Auf den Aussenseiten der ersten und zweiten Schenkel 4, 5 sind dafür Ausnehmungen 17 angebracht, in welchen die Muttern 16 versenkt montiert werden können. Hierdurch werden unerwünschte Erhebungen auf den Aussenflächen der Schenkel 4, 5 vermieden.

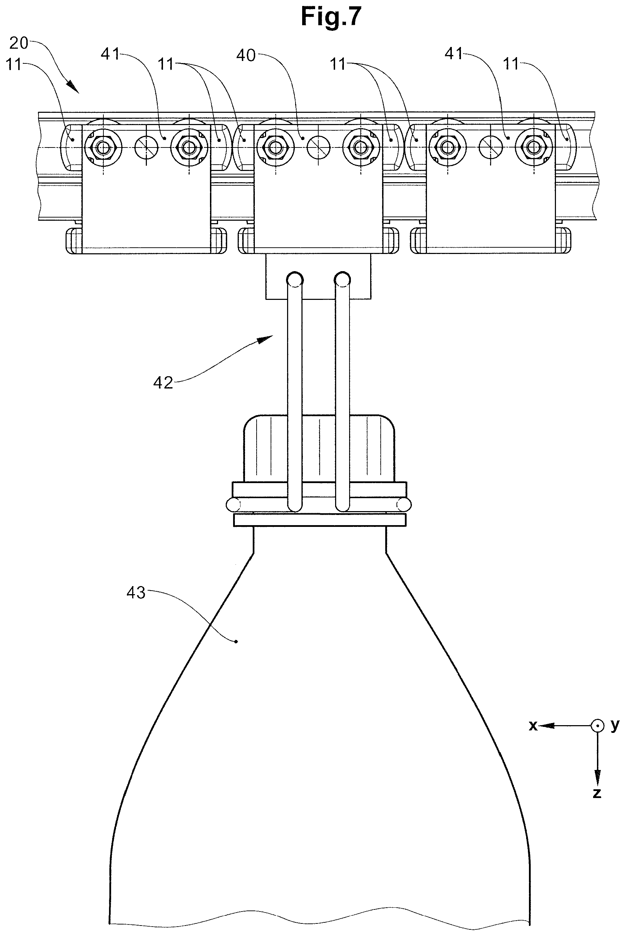

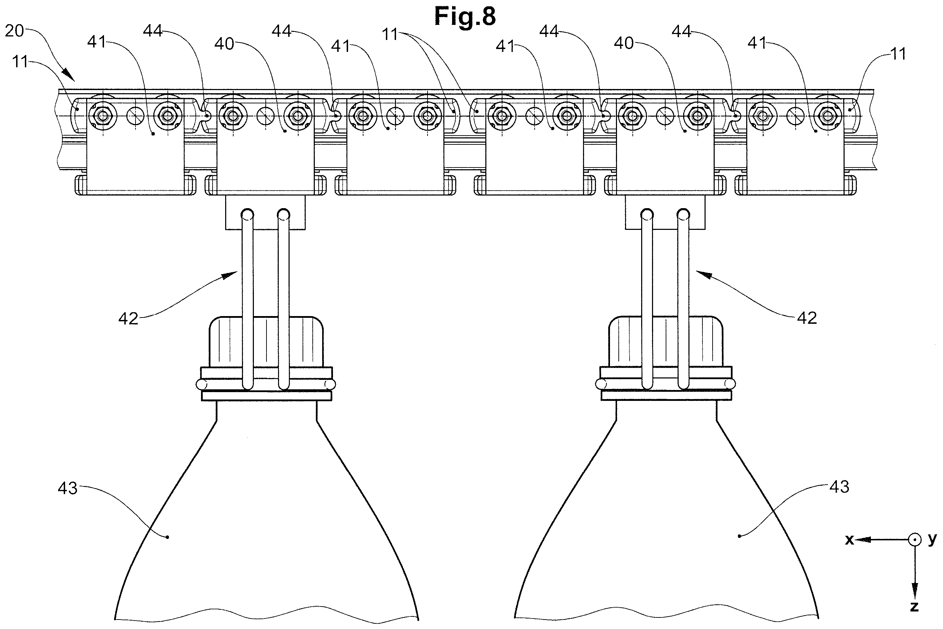

An der (nach unten gerichteten) Aussenseite des Verbindungsabschnitts 3 können Mittel zum hängenden Tragen von Transportgut angebracht sein, wie später gezeigt wird (Fig. 7, 8).

An der Aussenseiten des ersten und zweiten Schenkels 4, 5 sind im Ausführungsbeispiel Koppelelemente 9a,b angebracht, die seitlich (y-Achse) vom Laufwagen (horizontal) nach aussen abstehen. Diese Koppelelemente 9a,b dienen beispielsweise dazu, den Laufwagen 1 zum Aufwärtsbewegen auf einer Steigungsstrecke mit einem Mitnehmer einer Antriebskette (nicht gezeigt) zu koppeln. Wie in **Figur 3** gezeigt können die Koppelelemente 9a,b (z.B. mit Presssitz) in durchgehenden Bohrungen im ersten bzw. zweiten Schenkel 4, 5 befestigt sein und auch teilweise über deren Innenseiten nach innen abstehen. Wie in den **Figuren 4** **und** **5** gezeigt, sind die Koppelelemente 9a,b in der gezeigte Ausführungsform eines Laufwagens 1 mittig zwischen den Drehachsen der ersten und zweiten Rollen-Paare 6a,b, 7a,b angeordnet. Die Mittelachse der Koppelelemente 9a,b befindet sich zudem auf derselben Höhe (in Richtung der z-Achse) wie die Drehachsen 47 der ersten und zweiten Rollen 6a,b, 7a,b.

Die in den Figuren gezeigte Ausführungsform des Laufwagens 1 weist zudem im oberen Bereich der Schenkel 4, 5 angebrachte, elastisch verformbare Pufferkörper 11a-d auf (vgl. **Figur 1**). Diese dienen als Dämpfungselemente, welche beispielsweise Stösse beim Zusammentreffen zweier unabhängig voneinander bewegter Laufwagen 1 dämpfen. Dazu stehen die Pufferkörper 11a-d vom Laufwagenkörper 2 in Laufrichtung (bzw. Gegenlaufrichtung, x-Achse) ab und sind aus einem elastischen oder elastisch-plastischen Material hergestellt. In der gezeigten Ausführungsform weisen die Pufferkörper 11a-d Zapfen 13 auf, die in entsprechende Bohrungen am Laufwagenkörper 2 eingreifen und mit diesem eine Verbindung herstellen, wie in **Figur** 4 angedeutet ist. Die Pufferkörper 11a-d weisen eine Bombierung auf, um ein Verkanten benachbarter Laufwagen zu verhindern.

Zusätzlich zu diesen oberen Pufferkörpern 11a-d verfügt der gezeigte Laufwagen 1 auch über untere, am unteren Verbindungsabschnitt 3 mittig angebrachte Pufferkörper 12a,b. Diese sind gegenüber den oberen Pufferkörpern 11a-d in Laufrichtung (x-Achse) gesehen zurückversetzt angeordnet. Die unteren mittigen Pufferkörper 1 2a,b sind dazu in Einbuchtungen am unteren Verbindungsabschnitt 3 angeordnet. Diese versetzt angeordneten unteren Pufferkörper 1 2a,b sollen Stösse zwischen den unteren Verbindungsabschnitten 3 aufeinanderfolgender Laufwagen 1 auf Laufschienen mit abnehmender Steigung dämpfen.

Die **Figur** 5 zeigt eine mögliche Laufschiene 20 für einen erfindungsgemässen Laufwagen 1. Die Laufschiene 20 umfasst erste, zweite und dritte Profilabschnitte 21, 22, 23 die jeweils eine U- bzw. C-Form aufweisen. Diese Profilabschnitte sind so angeordnet, dass sich im Gesamtprofil der Laufschiene 20 obere horizontale Schenkel 24a,b und untere horizontale Schenkel 25a-b ergeben. Diese Schenkel 24a,b, 25a,b werden jeweils durch vertikale Verbindungsabschnitte 27a,b verbunden.

Auf der unteren Seite der Laufschiene 20 sind zwei vertikale Schenkel 26a,b angeordnet, die durch einen horizontalen Verbindungsabschnitt 27c verbunden sind. Die Innenseiten der horizontalen Schenkel 24a,b, 25a,b sind jeweils als horizontale Laufflächen 28a-d für die Tragrollen ausgebildet.

Die Innenseiten der vertikalen Schenkel 26a,b sind jeweils als vertikale Laufflächen 29a,b für die Führungsrollen ausgebildet.

Zwischen den Verbindungsabschnitten 27a-c befindet sich ein in Schienenlängsrichtung erstreckender Zwischenraum 30, der auf seiner Oberseite durch eine mechanische Verbindung 31 geschlossen ist.

In der gezeigten Laufschiene 20 sind zudem entlang der Laufrichtung (x-Achse) verteilte Befestigungsöffnungen 32a,b im horizontalen Verbindungsabschnitt 27c, sowie in der mechanischen Verbindung 31 angeordnet. In solchen können beispielsweise Schrauben zur Aufhängung einer Laufschiene 20 oder zum Verbinden mehrerer Laufschienen 20 mittels eines entsprechenden Verbinders angebracht werden.

In **Figur 6** ist gezeigt, wie ein Laufwagen 1 gemäss der bisher beschriebenen Ausführungsform als Aussenläufer auf einer Laufschiene 20 wirkt. Die ersten Tragrollen 6a,b sind dabei im Bereich des ersten Profilabschnitts 21 zwischen dem oberen horizontalen Schenkel 24a und dem unteren horizontalen Schenkel 25a angeordnet. Dasselbe gilt analog für die zweiten Tragrollen 7a,b und den zweiten Profilabschnitt 22. Die ersten und zweiten Tragrollen 6a,b, 7a,b können jeweils entweder unten mit einer unteren horizontalen Lauffläche 28b, 28d oder oben mit einer oberen horizontalen Lauffläche 28a, 28c in rollendem Kontakt sein. Dazu ist der vertikale Abstand zwischen den horizontalen Laufflächen etwas grösser gewählt als der maximale Durchmesser der Tragrollen.

Die Führungsrollen 8a,b sind im Bereich des dritten Profilabschnitts 23 zwischen den vertikalen Schenkeln angeordnet und können jeweils an einer der beiden vertikalen Laufflächen 29a oder 29b in rollendem Kontakt sein. Auch hier ist der horizontale Abstand zwischen den vertikalen Laufflächen etwas grösser gewählt als der maximale Durchmesser der Führungsrollen.

Aufgrund dieser Anordnung der Rollen relativ zu den Laufflächen sind solche Verschiebungen oder Verdrehungen des Laufwagens 1 relativ zur Laufschiene 20 ausgeschlossen, die zu einer Berührung der Rollen mit Teilen der Laufschiene führen würden, die nicht Laufflächen sind. Ebenso wird eine direkte Berührung des Laufwagenkörpers 2 mit der Laufschiene 20 verhindert.

Wie in **Figur 7** gezeigt wird, können Laufwagen bei einem erfindungsgemässen, in diesem Fall als Schwerkrafthängefördersystem ausgebildeten Fördersystem, sowohl als Transportwagen 40 als auch als Abstandswagen 41 verwendet werden. Transportwagen 40 können mittels Tragemittel 42 Transportgut 43 aufnehmen. Dabei ist es, wie in **Figur 7** gezeigt, möglich, einem Transportwagen 40 einen oder mehrere Abstandswagen 41 vor- und/oder nachlaufen zu lassen. Dies kann, wie in **Figur 7** gezeigt, in einem losen Verbund erfolgen, bei welchem sich der Transportwagen 40 und die Abstandswagen 41 nur temporär über die Pufferkörper 11 berühren, sich ansonsten aber weitgehend unabhängig voneinander entlang der Laufschiene 20 fortbewegen.

Alternativ können Transportwagen 40 und Abstandswagen 41 jedoch auch über lösbare Kupplungsmittel 44 zu einem dauerhaften Verbund zusammengeschlossen werden, wie in **Figur 8** gezeigt wird. Diese Kupplungsmittel 44 können wie gezeigt in die Pufferkörper 11 integriert sein. Durch solche dauerhaften Verbunde mehrerer Laufwagen 1 kann sichergestellt werden, dass diese auch bei Verzweigungen zusammen bleiben, bzw. die Anzahl Weichenstellungen reduziert werden. Ebenso kann bei Bedarf das zu fördernde Gut bei steigenden Streckenabschnitten auf mehrere Mitnehmer einer Antriebskette verteilt werden.

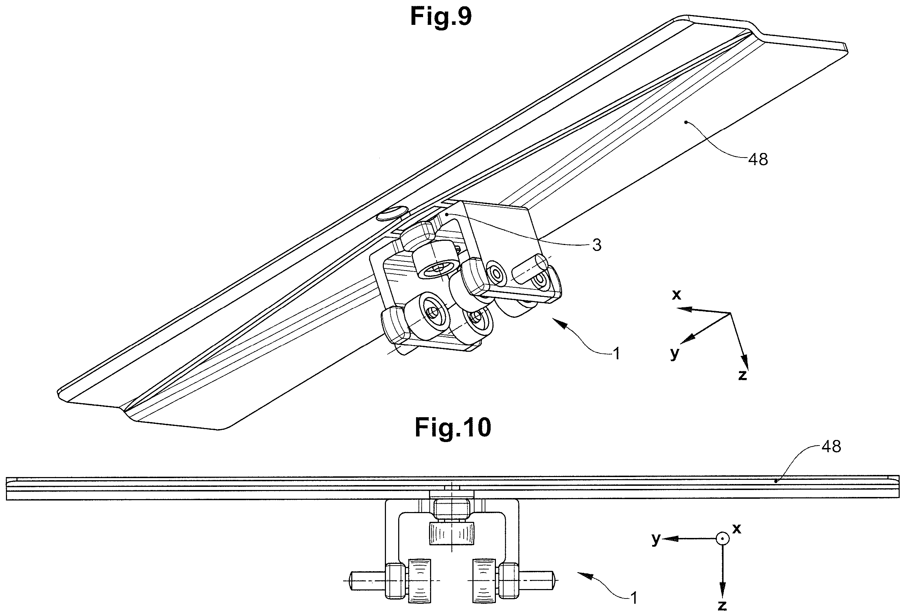

Die **Figuren 9 und 10** zeigen eine Ausführungsform eines Laufwagens 1, der nicht zum hängenden Fördern sondern zum stützenden bzw. tragenden Fördern ausgebildet ist. Dazu ist der Laufwagen 1 im Vergleich zu den in den **Figuren 1 bis 8** gezeigten Laufwagen um 180° um die x-Achse gedreht. Auf dem in dieser Ausführungsform oben liegenden Verbindungsabschnitt 3 ist eine Platte 48 angebracht, welche als Träger für Transportgut (nicht gezeigt) dienen kann.

Die Platte 48 kann dabei wie gezeigt eine Abstufung in z-Richtung aufweisen.

Durch eine Verkettung (nicht gezeigt) mehrerer solcher Laufwagen 1 mit Platten 48, kann eine Laufwagenanordnung mit einer aus den Platten 48 gebildeten sich in Laufrichtung erstreckenden Plattenanordnung gebildet werden. Die an den einzelnen Laufwagen 1 angeordneten Platten 48 überlappen sich in einer solchen Anordnung ähnlich wie Fischschuppen. Dadurch kann eine grössere, sich in Laufrichtung erstreckende Plattenanordnung gebildet werden. Auf diese Art können auch verkettete Plattenförderer gebildet werden.

## Patentansprüche

1. Laufwagen (1) für ein schienengeführtes Fördersystem, insbesondere einen Schwerkraftförderer, umfassend
a. einen zum Umgreifen einer Laufschiene (20) ausgebildeten, Laufwagenkörper (2), der einen ersten und einen zweiten Schenkel (4, 5) umfasst, die durch einen sich quer erstreckenden Verbindungsabschnitt (3) miteinander verbunden sind, wobei
b. der erste Schenkel (4) auf seiner Innenseite angebrachte erste Rollen (6a,b) aufweist und der zweite Schenkel (5) auf seiner Innenseite angebrachte zweite Rollen (7a,b) aufweist und, wobei die ersten und zweiten Rollen (6a,b; 7a,b) stehend angeordnet sind und jeweils paarweise vorgesehen sind und wobei die ersten und die zweiten Rollen (6a,b; 7a,b) spiegelsymmetrisch zu einer vertikalen Symmetrieebene (45) des Laufwagens (1) angeordnet sind,
und, wobei
c. am Verbindungsabschnitt (3) Mittel zum hängenden Fördern von Gegenständen angebracht sind, **dadurch gekennzeichnet, dass** der Verbindungsabschnitt (3) auf seiner Innenseite angebrachte dritte Rollen (8a,b) aufweist, die dritten Rollen (8a,b) paarweise vorgesehen sind und die Rollen eines Paars jeweils in Laufrichtung des Laufwagens (1) hintereinander angeordnet sind, wobei die Drehachsen (46) der dritten Rollen (8a,b) in der vertikalen Symmetrieebene (45) des Laufwagens (1) liegen und die dritten Rollen (8a,b) liegend angeordnet sind,

2. Laufwagen gemäss Patentanspruch 1, **dadurch gekennzeichnet, dass** Mittel (42) zum hängenden oder stützenden Fördern von Gegenständen (43) am Verbindungsabschnitt (3) angebracht sind.

3. Laufwagen gemäss einem der Patentansprüche 1 oder 2, **dadurch gekennzeichnet, dass** die dritten Rollen (8a,b) und die ersten und zweiten Rollen (6a,b; 7a,b) dieselben Abmessungen haben.

4. Laufwagen gemäss einem der Patentansprüche 1 bis 3, **dadurch gekennzeichnet, dass** die ersten und zweiten Rollen (6a,b; 7a,b) und/oder dritten Rollen (8a,b) als mit einem Rollenkörper umspritzte Kugellager ausgebildet sind.

5. Laufwagen gemäss einem der Patentansprüche 1 bis 4, **dadurch gekennzeichnet, dass** die ersten und zweiten Rollen (6a,b; 7a,b) und die dritten Rollen (8a,b) am Laufwagenkörper (2) lösbar befestigt, insbesondere mit dem Laufwagenkörper (2) verschraubt sind.

6. Laufwagen gemäss einem der Patentansprüche 1 bis 5, **dadurch gekennzeichnet, dass** der Laufwagenkörper (2) einstückig ausgebildet ist.

7. Laufwagen gemäss einem der Patentansprüche 1 bis 6, **dadurch gekennzeichnet, dass** der Laufwagen (1) wenigstens ein am ersten oder zweiten Schenkel (4, 5) oder dem Verbindungsabschnitt (3) nach aussen abstehend angeordnetes Koppelelement (9a,b) für die zumindest zeitweise Koppelung mit einer Vorrichtung zur Beschleunigung oder zur gleichförmigen Bewegung oder zur Bremsung des Laufwagens aufweist.

8. Laufwagen gemäss Patentanspruch 7, **dadurch gekennzeichnet, dass** der Laufwagen (1) zwei Koppelelemente (9a,b) aufweist, die spiegelsymmetrisch zur vertikalen Symmetrieebene (45) angeordnet sind.

9. Laufwagen gemäss einem der Patentansprüche 1 bis 8, **dadurch gekennzeichnet, dass** der Laufwagen (1) wenigstens einen vom Laufwagenkörper (2) in eine Laufrichtung des Laufwagens (1) nach aussen abstehenden, elastisch verformbaren Pufferkörper (11a-d; 12a,b) zum Abpuffern eines Kontaktes mit einem zweiten Laufwagen aufweist.

10. Laufwagen gemäss Patentanspruch 9, **dadurch gekennzeichnet, dass** der Laufwagen (1) wenigstens einen am Verbindungsabschnitt (3) mittig angebrachten mittigen Pufferkörper (12a,b) aufweist.

11. Laufwagen gemäss einem der Patentansprüche 1 bis 10, **dadurch gekennzeichnet, dass** der Laufwagen (1) Kupplungsmittel (44) aufweist, mit welchen er mit wenigstens einem anderen Laufwagen verbunden werden kann, zur Bildung einer verketteten Laufwagenanordnung.

12. Laufwagen gemäss Patentanspruch 11, **dadurch gekennzeichnet, dass** der Laufwagen (1) wenigstens einen vom Laufwagenkörper (2) in eine Laufrichtung des Laufwagens (1) nach aussen abstehenden, elastisch verformbaren Pufferkörper (11a-d; 12a,b) zum Abpuffern eines Kontaktes mit einem zweiten Laufwagen aufweist, und dass die Kupplungsmittel (44) in den Pufferkörper integriert sind.

13. Fördersystem umfassend wenigstens eine Laufschiene (20) und wenigstens einen Laufwagen (1) gemäss einem der Patentansprüche 1 bis 12, **wobei** die Laufschiene (20) und der Laufwagen (1) aufeinander abgestimmt sind und die Laufschiene (20) vom Laufwagen (1) umgriffen wird.

14. Fördersystem nach Patentanspruch 13, **dadurch gekennzeichnet, dass** mehrere Laufwagen (1) vorgesehen sind, dass ein Teil der Laufwagen (1) als Transportwagen (40) ausgebildet und mit Transportgut (43) bestückbar sind, und ein anderer Teil der Laufwagen (1) als Abstandswagen (41) ausgebildet und zur Sicherstellung eines Abstandes zwischen den Transportwagen (40) einsetzbar sind.

15. Verfahren zum Betreiben eines Fördersystems nach Anspruch 13, **wobei** eine Mehrzahl von Laufwagen (1) vorgesehen ist, und ein Teil der Laufwagen (1) mit Transportgut (43) bestückt sind und anderer Teil der Laufwagen (1) leer sind und zur Ausbildung eines Abstandes zwischen den mit Transportgut (43) bestückten Laufwagen eingesetzt sind.

16. Verfahren gemäss Patentanspruch 15, **dadurch gekennzeichnet, dass** die mit Transportgut (43) bestückten Laufwagen (1) und die zur Bildung eines Abstandes zwischen ihnen eingesetzten leeren Laufwagen (1) aneinander gekoppelt sind.

17. Verfahren gemäss einem der Patentansprüche 13 bis 16, **dadurch gekennzeichnet, dass** mehrere Laufwagen (1) zu wenigstens einer gekoppelten Laufwagenanordnung verkettet sind.

18. Verfahren gemäss Patentanspruch 17, **dadurch gekennzeichnet, dass** die Last wenigstens eines geförderten Transportguts (43) auf mehrere Laufwagen (1) der wenigstens einen gekoppelten Laufwagenanordnung verteilt ist.

## Claims

1. Carriage (1) for a rail-guided conveyor system, in particular a gravity-type conveyor, comprising
a. a carriage body (2) which is configured for embracing a running rail (20) and which comprises a first and a second leg (4, 5) which are interconnected by a transversely extending connection portion (3), wherein
b. the first leg (4) has first rollers (6a,b) which are attached to the internal side of the former, and the second leg (5) has second rollers (7a,b) which are attached to the internal side of the former, wherein the first and the second rollers (6a,b; 7a,b) are vertically disposed and each are provided in pairs and wherein the first and the second rollers (6a,b; 7a,b) are disposed in a mirror-symmetrical manner to a vertical symmetry plane (45) of the carriage (1), and wherein
c. at the connection portion (3) means for conveying objects in a suspended manner are attached, **characterized in that** the connection portion (3) has third rollers (8a,b) which are attached to the internal side of the former, the third rollers (8a,b) are provided in pairs and wherein the rollers of each pair are disposed sequentially in the running direction of the carriage (1), wherein the rotation axes (46) of the third rollers (8a,b) lie in the vertical symmetry plane (45) of the carriage (1) and the third rollers (8a,b) are horizontally disposed.

2. Carriage according to Claim 1, **characterized in that** means (42) for conveying objects (43) in a suspended or supported manner are attached to the connection portion (3).

3. Carriage according to one of Claims 1 or 2, **characterized in that** the third rollers (8a,b) and the first and the second rollers (6a,b; 7a,b) have the same dimensions.

4. Carriage according to one of Claims 1 to 3, **characterized in that** the first and the second rollers (6a,b; 7a,b) and/or the third rollers (8a,b) are each configured to comprise a roller body being injection-moulded around a ball bearing.

5. Carriage according to one of Claims 1 to 4, **characterized in that** the first and the second rollers (6a,b; 7a,b) and the third rollers (8a,b) are releasably fastened to the carriage body (2), in particular are screwed to the carriage body (2).

6. Carriage according to one of Claims 1 to 5, **characterized in that** the carriage body (2) is integrally configured.

7. Carriage according to one of Claims 1 to 6, **characterized in that** the carriage (1) has at least one coupling element (9 a,b) for the at least temporary coupling to a device for accelerating or for uniformly moving or for braking the carriage, said coupling element (9 a,b) being disposed so as to outwardly protrude on the first or the second leg (4, 5) or on the connection portion (3).

8. Carriage according to Claim 7, **characterized in that** the carriage (1) has two coupling elements (9 a,b) which are disposed in a mirror-symmetrical manner to the vertical symmetry plane (45).

9. Carriage according to one of Claims 1 to 8, **characterized in that** the carriage (1) has at least one elastically deformable buffer body (11 a-d; 12 a,b) for buffering any contact with a second carriage, said buffer body (11 a-d; 12 a,b) outwardly protruding from the carriage body (2) in a running direction of the carriage (1).

10. Carriage according to Claim 9, **characterized in that** the carriage (1) has at least one central buffer body (12 a,b) which is centrally attached to the connection portion (3).

11. Carriage according to one of Claims 1 to 10, **characterized inthat** the carriage (1) has coupling means (44) by way of which the former may be connected to at least one other carriage so as to form a linked carriage assembly.

12. Carriage according to Claim 11, **characterized in that** the carriage (1) has at least one elastically deformable buffer body (11 a-d; 12 a,b) for buffering any contact with a second carriage, said buffer body (11 a-d; 12 a,b) outwardly protruding from the carriage body (2) in a running direction of the carriage (1), and **in that** the coupling means (44) are integrated in the buffer body.

13. Conveyor system comprising at least one running rail (20) and at least one carriage (1) according to one of Claims 1 to 12, **wherein** the running rail (20) and the carriage (1) are mutually adapted and the running rail (20) is embraced by the carriage (1).

14. Conveyor system according to Claim 13, **characterized in that** a plurality of carriages (1) are provided, **in that** some of the carriages (1) are configured as transportation trucks (40) and are loadable with cargo (43), and some of the carriages (1) are configured as spacer trucks (41) and are employable for ensuring a spacing between the transportation trucks (40).

15. Method for operating a conveyor system according to Claim 13, **wherein** a plurality of carriages (1) are provided, and some of the carriages (1) are loaded with cargo (43), and some of the carriages (1) are empty and are employed for configuring a spacing between those carriages that are loaded with cargo (43).

16. Method according to Claim 15, **characterized in that** the carriages (1) that are loaded with cargo (43), and the empty carriages (1) that are employed for configuring a spacing between the former are coupled to one another.

17. Method according to one of Claims 13 to 16, **characterized in that** a plurality of carriages (1) are linked to form at least one coupled carriage assembly.

18. Method according to Claim 17, **characterized in that** the load of at least one conveyed item of cargo (43) is distributed across a plurality of carriages (1) of the at least one coupled carriage assembly.

## Revendications

1. Un chariot (1) pour un système de convoyage, en particulier un système de convoyage par gravité, comprenant
a. un corps de chariot (2) configuré pour entourer un rail de roulement (20), lequel comporte une première et une deuxième branche (4, 5) qui sont reliées entre elles par une portion de liaison (3) qui s'étend transversalement,
b. la première branche (4) possédant des premiers galets (6a, b) et la deuxième branche (5) possédant des deuxièmes galets (7a, b) montés sur son côté intérieur et les premiers et deuxièmes galets (6a, b ; 7a, b) étant disposés en position verticale et sont respectivement présents par paires et les premiers et deuxièmes galets (6a, b ; 7a, b) sont disposés selon une symétrie en miroir par rapport à un plan de symétrie vertical (45) du chariot (1) et
c. des moyens servant au convoyage suspendu d'objets sont montés au portion de liaison (3) **caractérisé en ce que** le portion de liaison (3) possédant des troisièmes galets (8a, b) montés sur son côté intérieur et les troisièmes galets (8a, b) sont présents par paires et les galets d'une paire étant respectivement disposés l'un derrière l'autre dans le sens de déplacement du chariot (1) et les axes de rotation (46) des troisièmes galets (8a, b) se trouvent dans le plan de symétrie vertical (45) du chariot (1) et les troisièmes galets (8a, b) étant disposés en position horizontale.

2. Le chariot selon la revendication 1, **caractérisé en ce que** le chariot (1), des moyens (42) servant au convoyage suspendu ou soutenu d'objets (43) sont montés au niveau de la portion de liaison (3).

3. Le chariot selon l'une des revendications 1 ou 2, **caractérisé en ce que** les troisièmes galets (8a, b) ainsi que les premiers et deuxièmes galets (6a, b ; 7a, b) possèdent les mêmes dimensions.

4. Le chariot selon l'une des revendications 1 à 3, **caractérisé en ce que** les premiers et deuxièmes galets (6a, b ; 7a, b) et/ou les troisièmes galets (8a, b) sont réalisés sous la forme de roulements à billes surmoulés avec un corps de galet.

5. Le chariot selon l'une des revendications 1 à 4, **caractérisé en ce que** les premiers et deuxièmes galets (6a, b ; 7a, b) et les troisièmes galets (8a, b) sont fixés de manière amovible au corps de chariot (2), notamment vissés au corps de chariot (2).

6. Le chariot selon l'une des revendications 1 à 5, **caractérisé en ce que** le corps de chariot (2) est réalisé monobloc.

7. Le chariot selon l'une des revendications 1 à 6, **caractérisé en ce que** le chariot (1) possède au moins un élément de couplage (9a, b), disposé en saillie vers l'extérieur au niveau de la première ou de la deuxième branche (4, 5) ou de la portion de liaison (3), pour l'accouplement au moins temporaire avec un dispositif servant à l'accélération ou au mouvement uniforme ou au freinage du chariot.

8. Le chariot selon la revendication 7, **caractérisé en ce que** le chariot (1) possède deux éléments de couplage (9a, b) qui sont disposés selon une symétrie en miroir par rapport au plan de symétrie vertical (45).

9. Le chariot selon l'une des revendications 1 à 8, **caractérisé en ce que** le chariot (1) possède au moins un corps de butoir (11a-d ; 12a, b) déformable élastiquement et en saillie vers l'extérieur depuis le corps de chariot (2) dans un sens de déplacement du chariot (1), destiné à amortir un contact avec un deuxième chariot.

10. Le chariot selon la revendication 9, **caractérisé en ce que** le chariot (1) possède au moins un corps de butoir (12a, b) central disposé au centre au niveau de la portion de liaison (3).

11. Le chariot selon l'une des revendications 1 à 10, **caractérisé en ce que** le chariot (1) possède des moyens d'attelage (44) avec lesquels il peut être relié à au moins un autre chariot en vue de former un arrangement de chariots chaînés.

12. Le chariot selon la revendication 11, **caractérisé en ce que** le chariot (1) possède au moins un corps de butoir (11a-d ; 12a, b) déformable élastiquement et en saillie vers l'extérieur depuis le corps de chariot (2) dans un sens de déplacement du chariot (1), destiné à amortir un contact avec un deuxième chariot, et **en ce que** les moyens d'attelage (44) sont intégrés dans le corps de butoir.

13. Système de convoyage comprenant au moins un rail de roulement (20) et au moins un chariot (1) selon l'une des revendications 1 à 12, **caractérisé en ce que** le rail de roulement (20) et le chariot (1) étant adaptés l'un à l'autre et le rail de roulement (20) étant entouré par le chariot (1).

14. Système de convoyage par gravité selon la revendication 13, **caractérisé en ce que** plusieurs chariots (1) sont présents, **en ce qu'**une partie des chariots (1) sont réalisés sous la forme de chariots de transport (40) et peuvent être garnis de marchandises transportées (43), et une autre partie des chariots (1) sont réalisés sous la forme de chariots d'espacement (41) et peuvent être utilisés pour assurer un écart entre les chariots de transport (40).

15. Procédé pour faire fonctionner un système de convoyage selon la revendication 13, une pluralité de chariots (1) étant présents, et une partie des chariots (1) étant garnis de marchandises transportées (43) et une autre partie des chariots (1) étant vides et étant utilisés pour former un écart entre les chariots garnis de marchandises transportées (43).

16. Procédé selon la revendication 15, **caractérisé en ce que** les chariots (1) garnis de marchandises transportées (43) et les chariots (1) vides utilisés pour former un écart entre eux sont accouplés les uns aux autres.

17. Procédé selon l'une des revendications 13 et 16, **caractérisé en ce que** plusieurs chariots (1) sont chaînés en au moins un arrangement de chariots accouplés.

18. Procédé selon la revendication 17, **caractérisé en ce que** la charge d'au moins une marchandise transportée (43) en convoyage est distribuée sur plusieurs chariots (1) de l'au moins un arrangement de chariots accouplés.
